# EUROPEAN PATENT SPECIFICATION

(11) **EP 2 434 711 B1**
(45) Date of publication and mention of the grant of the patent: **15.04.2015**
(21) Application number: 10785748.4
(22) Date of filing: 09.06.2010
(51) Int. Cl.: H04L 29/02, H04W 88/18, G10L 19/00, H04M 7/00, H04W 8/22

(54) **METHOD, CONTROL APPARATUS AND SYSTEM FOR LOCAL EXCHANGE**
VERFAHREN, STEUERVORRICHTUNG UND SYSTEM FÜR LOKALEN AUSTAUSCH
PROCÉDÉ, APPAREIL ET SYSTÈME DE CONTRÔLE EN TÉLÉPHONIE LOCALE

(30) Priority: 10.06.2009 CN 200910147413
(43) Date of publication of application: 28.03.2012
(73) Proprietor: Huawei Technologies Co., Ltd., Longgang District Shenzhen, Guangdong 518129 (CN)
(72) Inventor: HU, Xiaoqun, Shenzhen Guangdong 518129 (CN); YAO, Jianhui, Shenzhen Guangdong 518129 (CN); LIU, Jun, Shenzhen Guangdong 518129 (CN); LIU, Shaofeng, Shenzhen Guangdong 518129 (CN)
(74) Representative: Körber, Martin Hans
(86) International application number: PCT/CN2010/073700
(87) International publication number: WO 2010/142235

(56) References cited:
- WO-A1-01/24558
- CN-A- 1 376 372
- CN-A- 101 378 521
- CN-A- 101 378 529
- US-A- 5 761 195
- US-A1- 2001 024 960

## Description

### FIELD OF THE INVENTION

The present invention relates to the field of network communications, and in particular, to a method, a control apparatus and a system for local switch.

### BACKGROUND OF THE INVENTION

With the development of a Global System for Mobile Communications (GSM, Global System for Mobile Communications) network, application coverage of the GSM network is turned from dense urban area coverage to remote district coverage. Characteristics of remote districts are that sites scatter but persons are relatively concentrated, and a call is generally made between local users, that is, users in coverage of a same Base Station Controller (BSC). In this coverage, the use of a local switch technology can greatly reduce costs for an operator to establish a network.

During local switch, rate adaptation does not need to be performed through a Transcoder & Rate Adaptation Unit (Transcoder & Rate Adaptation Unit, TRAU), which requires that rate types used by two Mobile Stations (Mobile Station, MS) that perform the local switch need to be consistent, that is, the two MSs need to use a Full Rate speech codec (Full Rate speech codec, FR) at the same time, or use a Enhanced Full Rate speech codec (Enhanced Full Rate speech code, EFR) at the same time, or use a Half Rate speech codec (Half Rate speech codec, HR) at the same time so as to perform the local switch. If the two MSs do not use the same speech codec at the same time, no voice exists in the call. For an Adaptive Multi-Rate codec (Adaptive Multi-Rate codec, AMR) speech version, a rate set rather than a single rate is used between the MS and a Base Transceiver Station (Base Transceiver Station, BTS) for activation (the MS and the BTS negotiate the rate type according to uplink/downlink speech quality and select an appropriate rate from the rate set for communication). Therefore, although two MSs use the AMR speech version, the rate sets used by the two MSs are different, so that no voice exists after the local switch.

International patent application WO01/024558 A1 relates to a method for performing a handover with the view of changing a telecommunications channel utilized by a connection between a mobile station (MS) and a mobile services switching centre (MSC) in a mobile communications system, the telecommunications channel comprising a radio channel connecting the mobile station (MS) and a base station (BTS1) and a channel connecting the base station (BTS1) and the mobile services switching centre (MSC).

US patent US 5761195 A1 provides an apparatus for cross-connecting an end-to-end connection between an origination mobile station and a destination mobile station in a network of cross-connect nodes, which includes a call control circuit.

US patent application US 20010024960 A1 provides a method of optimizing speech quality in a mobile radio system by using if possible a tandem free operation mode for a mobile-to-mobile call.

### SUMMARY OF THE INVENTION

Embodiments of the present invention aim at providing a method, a control apparatus and a system for local switch, so as to solve the foregoing problem in the prior art.

An embodiment of the present invention provides a method for local switch, where the method includes:
detecting, by a Base Station Controller, BSC,, whether AMR speech versions used by two MSs that need to perform local switch are the same and whether rate sets of the AMR speech versions of the two Mobile Stations, MSs, that need to perform the local switch have an intersection;
when the AMR speech versions are different, modifying, by the BSC, the AMR speech versions through a handover procedure or a mode modification procedure so that the AMR speech versions are the same, and when the rate sets of the AMR speech versions do not have the intersection, modifying the rate sets of the AMR speech versions through the handover procedure or the mode modification procedure so that the rate sets of the AMR speech versions have the intersection; and
establishing, by the BSC, the local switch between the two MSs that have the same AMR speech version and the intersection of the rate sets.

An embodiment of the present invention further provides a control apparatus for local switch, where the apparatus includes:
a detection module, configured to detect whether AMR speech versions of two Mobile Stations, MSs that need to perform local switch are the same and whether rate sets of the AMR speech versions of the two MSs that need to perform the local switch have an intersection;
a modification module, configured to: when the AMR speech versions are different, modify the AMR speech versions through a handover procedure or a mode modification procedure so that the AMR speech versions are the same, and when the rate sets of the AMR speech versions do not have the intersection, modify the rate sets of the AMR speech versions through the handover procedure or the mode modification procedure so that the rate sets of the AMR speech versions have the intersection; and
an establishment module, configured to establish the local switch between the two MSs that have the same AMR speech version and the intersection of the rate sets.

Through the embodiments provided in the present invention, the MS that performs the local switch can perform the local switch by using the AMR speech version.

### BRIEF DESCRIPTION OF THE DRAWINGS

FIG. 1 is a schematic flow chart of a method for local switch according to an embodiment of the present invention;
FIG. 2 is a schematic flow chart of a method for local switch according to another embodiment of the present invention;
FIG. 3 is a schematic flow chart of a method for local switch according to another embodiment of the present invention;
FIG. 4 is a schematic structural diagram of a control apparatus for local switch according to another embodiment of the present invention; and
FIG. 5 is a schematic structural diagram of a system for local switch according to still another embodiment of the present invention.

### DETAILED DESCRIPTION OF THE EMBODIMENTS

In order to make the objectives, technical solutions, and advantages of the present invention more clearly and comprehensibly, the embodiments of the present invention are further described in detail in the following with reference to the accompanying drawings. Here, the exemplary embodiments and the illustrations of the present invention are only intended to explain the present invention, rather than limit the present invention.

### Example

This example provides a method for local switch, and in particular, a method for local switch supporting AMR speech coding. The method is described in detail in the following with reference to an accompanying drawing.

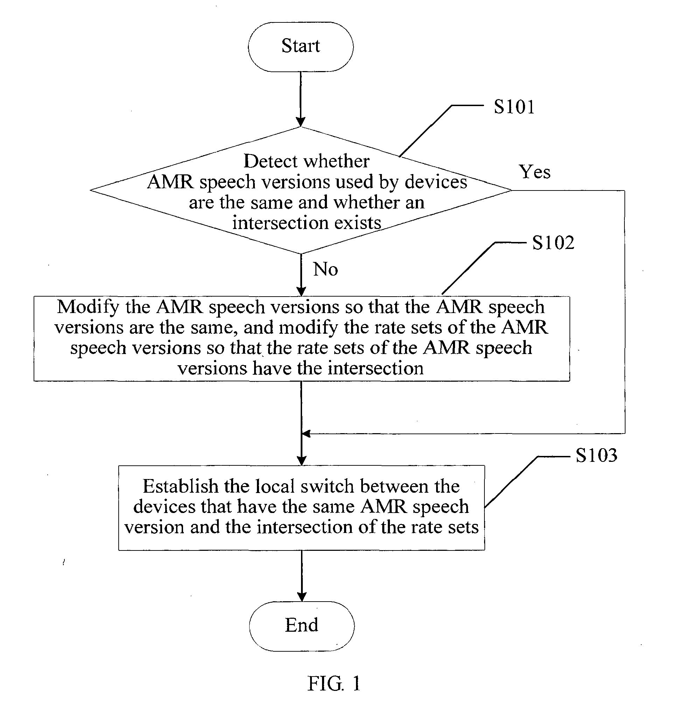

Referring to FIG. 1, FIG. 1 shows a method for local switch according to an example of the present invention. The method includes:

Step S101: Detect whether AMR speech versions used by devices that need to perform local switch are the same and whether rate sets of the AMR speech versions of the devices that need to perform the local switch have an intersection.

The devices that need to perform the local switch include a Mobile Station (MS) and a Base Transceiver Station (BTS).

The MS and the BTS where the MS is located use the same rate set.

This step may be completed through a BSC device, that is, a Base Station Controller (Base Station Controller, BSC). Modifying the speech versions may specifically be modifying the AMR speech versions of the two devices by using a handover procedure or a mode modification procedure so that the AMR speech versions are the same. For specific implementation details of the handover procedure or the mode modification procedure, reference may be made to Section 3.4.4 "Handover procedure" and Section 3.4.6 "Channel mode modify procedure" in 3GPP TS 44.018, and details are not described here.

Usable AMR speech versions include speech versions such as a full rate speech version 3, a full rate speech version 5, and a half rate speech version 3, and other AMR speech versions supported by a BSC and adopted by a subsequent GSM.

Step S102: When the AMR speech versions are different, modify the AMR speech versions so that the AMR speech versions are the same, and when the rate sets of the AMR speech versions do not have the intersection, modify the rate sets of the AMR speech versions so that the rate sets of the AMR speech versions have the intersection.

This step may be completed by the BSC. The AMR speech version of a device at one end of the local switch is modified through the mode modification method or the handover method, so that the AMR speech version of the device is the same as that used by a device at the another end of the local switch, and then the rate set is modified through the mode modification procedure or the handover procedure, so that the rate set of an MS at a local end and the rate set of a peer MS have at least one same rate.

Step S103: Establish the local switch between the devices that have the same AMR speech version and the intersection of the rate sets.

In this example, the AMR speech versions used by the devices that need to perform the local switch may be modified so that the AMR speech versions are the same, and the rate sets of the AMR speech versions are modified so that the rate sets of the AMR speech versions have the intersection, so as to perform the local switch by using the AMR speech version.

Alternatively, an optional manner includes: detecting whether rate sets of AMR speech versions of devices that need to perform local switch have an intersection; when the rate sets of the AMR speech versions do not have the intersection, modifying the rate sets of the AMR speech versions so that the rate sets of the AMR speech versions have the intersection; and establishing the local switch between the devices that have the intersection of the rate sets.

Specifically, the rate sets may be modified through a mode modification procedure or a handover procedure, so that the rate sets of the devices that need to perform the local switch (that is, a local device and a peer device) have at least one same rate.

### Embodiment 1

This embodiment provides a method for local switch, and in particular, a method for local switch supporting AMR speech coding. The method is described in detail in the following with reference to an accompanying drawing.

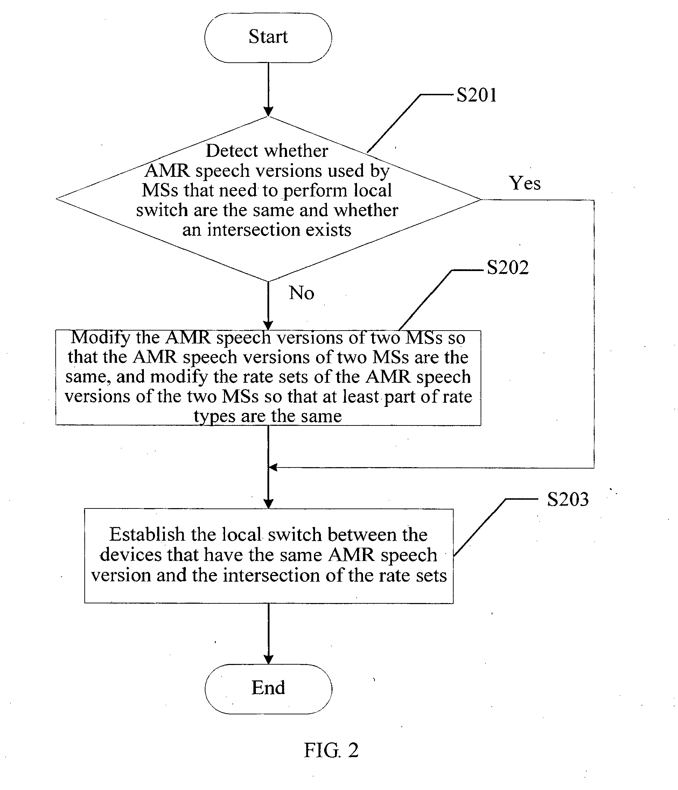

Referring to FIG 2, FIG. 2 shows a method for local switch according to an embodiment H of the present invention. The method includes:
Step S201: Detect whether AMR speech versions used by MSs that need to perform local switch are the same and whether rate sets of the AMR speech versions have an intersection; if the AMR speech versions are the same and the rate sets of the AMR speech versions have the intersection, perform the following step 203; and if the AMR speech versions used by the MSs that need to perform the local switch are different, or the rate sets of the used AMR speech versions do not have the intersection, perform step 202.
Step 202: If the AMR speech versions are different, modify the AMR speech versions of two MSs so that the AMR speech versions of two MSs are the same, and if the rate sets of the AMR speech versions do not have the intersection, modify the rate sets of the AMR speech versions of the two MSs so that at least part of rate types are the same. This step may be performed through a BSC. In this embodiment, a manner for the BSC to detect and modify the AMR speech version of the MS and the rate set of the MS is the same as that in the example Different from the example, the BSC modifies the AMR speech version and the rate set through a handover procedure or a mode modification procedure.
Step S203: Establish the local switch between the devices that have the same AMR speech version and the intersection of the rate sets.

In this embodiment, functions of an AMR may be fully utilized while an MS performs the local switch by using the AMR speech version, so as to improve speech quality and reduce the number of times of handover procedure or mode modification procedure.

### Embodiment 2

This embodiment provides a method for local switch, and in particular, a method for local switch supporting AMR speech coding. The method is described in detail in the following with reference to an accompanying drawing.

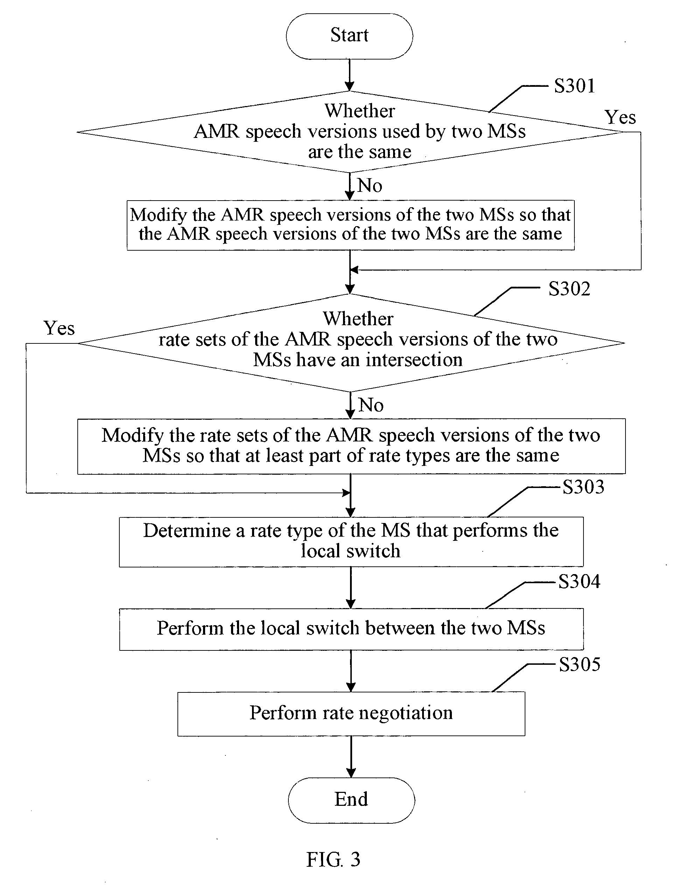

Referring to FIG. 3, FIG. 3 shows a method for local switch according to another embodiment of the present invention. The method includes:
Step S301: Detect whether AMR speech versions used by MSs that need to perform local switch are the same; if the AMR speech versions are the same, perform step S302; and if the AMR speech versions are different, modify the AMR speech versions of two MSs so that the AMR speech versions of two MSs are the same, and then perform step S302.
Step S302: Detect whether rate sets of the AMR speech versions used by the MSs that need to perform the local switch have an intersection; if the rate sets have the intersection, perform step S303; and if the rate sets do not have the intersection, modify the rate sets of the AMR speech versions of the two MSs so that at least part of rate types are the same, and then perform step S303. This step may be performed by a BSC. A specific manner is the same as that in the example.
Step S303: Determine a rate type of the MS that performs the local switch.
   In this step, the BSC sends a message to BTSs where the two MSs are located respectively, so as to notify the BTSs of a same rate used during the local switch, where the same rate used during the local switch is in the modified rate sets of the AMR speech versions of the two MSs, and notify each BTS that a peer BTS should be informed of the rate set used by a local MS.
Step S304: Perform the local switch between the two MSs.
   This step is performed by the BSC to establish the local switch.
Step S305: Perform rate negotiation.

In this step, the BSC notifies the BTSs where the two MSs are located that the rate negotiation should be performed respectively. Specifically, when the MS at one end needs to change the rate type, the BTS where the MS is located judges whether a peer MS supports the modified rate type; if the peer MS does not support the modified rate type, the rate type is not changed; and if the peer MS supports the modified rate type, the rate type is changed. In this embodiment, rate coordination is performed after the local switch is established, but the rate coordination may also be performed before the local switch is established.

In this embodiment, functions of an AMR may be fully utilized while the MS performs the local switch by using the AMR speech version, so as to improve speech quality and implement the rate coordination between the BTSs.

### Embodiment 3

This embodiment provides a control apparatus for local switch, and in particular, a control apparatus for local switch supporting AMR speech coding. The apparatus is described in detail in the following with reference to an accompanying drawing.

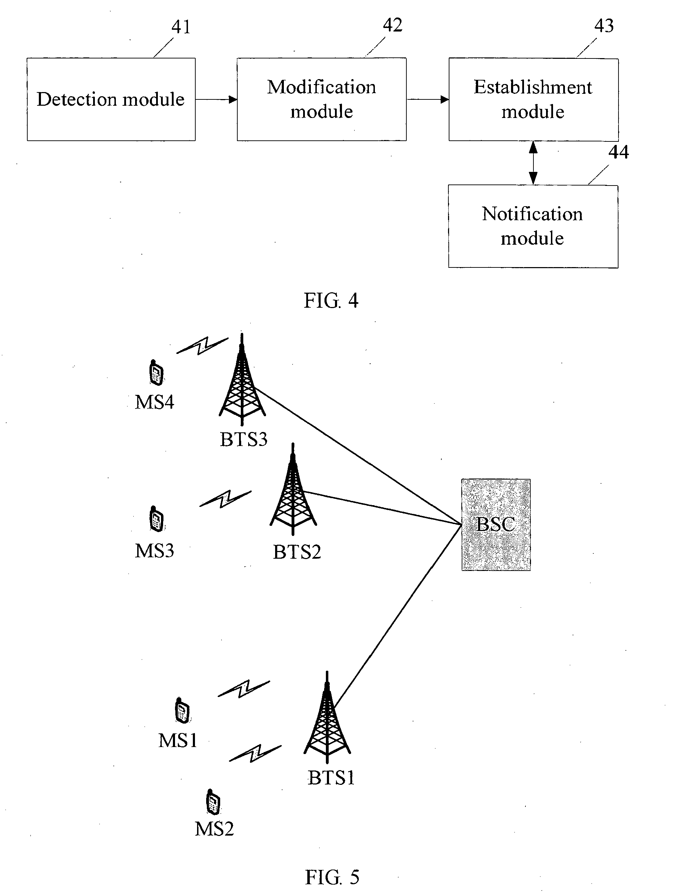

Referring to FIG. 4, FIG. 4 shows a control apparatus for local switch according to another embodiment of the present invention. The control apparatus includes:
a detection module 41, configured to detect whether AMR speech versions used by devices that need to perform local switch are the same and whether rate sets of the AMR speech versions of the devices that need to perform the local switch have an intersection;
a modification module 42, configured to: modify the AMR speech versions so that the AMR speech versions are the same when the AMR speech versions are different, and modify the rate sets of the AMR speech versions so that the rate sets of the AMR speech versions have the intersection when the rate sets of the AMR speech versions do not have the intersection; and
an establishment module 43, configured to establish the local switch between two MSs that have a same AMR speech version or a same rate type in the rate sets of the AMR speech versions. Alternatively, the establishment module 43 may also be configured to establish the local switch between two MSs that have a same AMR speech version and a same rate type in the rate sets of the AMR speech versions.

Where, the modification module 42 may modify the AMR speech versions of the two MSs so that the AMR speech versions of the two MSs are the same and modify the rate sets of the AMR speech versions of the two MSs so that at least part of rate types are the same in one modification through handover procedure or a mode modification procedure. Certainly, the modification module 42 may also perform the handover or the mode modification twice, where in one time, the AMR speech versions are modified so that the AMR speech versions are the same, and in the other time, the rate sets of the AMR speech versions are modified so that at least part of rate types are the same.

As shown in FIG. 4, the apparatus may also include a notification module 44, configured to, before the establishment module 43 establishes the local switch, notify BTSs where the two MSs are located of a same rate used during the local switch and notify each BTS that a peer BTS should be informed of the rate set used by a local MS, and before or after the establishment module 43 establishes the local switch, notify the BTSs where the two MSs are located that rate negotiation should be performed. A specific operation for each BTS to perform rate coordination is: When the MS at one end needs to change the rate type, the BTS where the MS is located judges whether a peer MS supports the modified rate type; if the peer MS does not support the modified rate type, the rate type is not changed; and if the peer MS supports the modified rate type, the rate type is changed.

As an optional method, the detection module 41 may be configured to detect whether rate sets of AMR speech versions of devices that need to perform local switch have an intersection, the modification module 42 is configured to: when the rate sets of the AMR speech versions do not have the intersection, modify the rate sets of the AMR speech versions so that the rate sets of the AMR speech versions have the intersection, and the establishment module 43 is configured to establish the local switch between the devices that have a same rate type in the rate sets of the AMR speech versions, that is, an intersection existing in the rate sets of the AMR speech versions.

Specifically, the modification module 42 may modify the rate sets through a mode modification procedure or handover procedure, so that the rate sets of the devices that need to perform the local switch have the intersection, that is, the rate sets of the devices have at least one same rate.

In this embodiment, functions of an AMR may be fully utilized while the MS performs the local switch by using the AMR speech version, so as to improve speech quality, reduce the number of modification operations, and implement the rate coordination between the BTSs.

### Embodiment 4

This embodiment provides a system for local switch, and in particular, a system for local switch supporting AMR speech coding. The system is described in detail in the following with reference to an accompanying drawing. Referring to FIG. 5, the system includes a BSC and BTSs.

The BSC detects whether AMR speech versions used by devices that need to perform local switch are the same and whether rate sets of the AMR speech versions of the devices that need to perform the local switch have an intersection, when the AMR speech versions are different, modifies the AMR speech versions so that the AMR speech versions are the same, when the rate sets of the AMR speech versions do not have the intersection, modifies the rate sets of the AMR speech versions so that the rate sets of the AMR speech versions have the intersection; and establishes the local switch between the devices that have the same AMR speech version and the intersection of the rate sets.

The BTSs are configured to perform the local switch by using the same AMR speech version or the rate sets of the AMR speech versions having the intersection. Alternatively, the BTSs may also be configured to perform the local switch by using the same AMR speech version and the rate sets of the AMR speech versions having the intersection.

Alternatively, as an optional manner, the BSC detects whether rate sets of AMR speech versions of devices that need to perform local switch have an intersection, when the rate sets of the AMR speech versions do not have the intersection, modifies the rate sets of the AMR speech versions so that the rate sets of the AMR speech versions have the intersection, and establishes the local switch between the devices that have the intersection of the rate sets of the AMR speech versions. The BTSs are configured to perform the local switch by using the rate sets of the AMR speech versions having the intersection.

As shown in FIG. 5, MSs may perform the local switch through a same BTS. For example, an MS1 and an MS2 perform the local switch through a BTS1. The MSs may also perform the local switch through different BTSs. For example, an MS3 and an MS4 perform the local switch through a BTS2 and a BTS3 respectively.

When the MSs perform the local switch through different BTSs, before establishing the local switch, the BSC notifies the BTSs where two MSs are located of a same rate used during the local switch and notify each BTS that a peer BTS should be informed of the rate set used by a local MS, and before or after establishing the local switch, notifies the BTSs where the two MSs are located that rate negotiation should be performed. A specific operation for the BTS to perform rate coordination is: When the MS at one end needs to change a rate type, the BTS judges whether a peer MS supports the modified rate type; if the peer MS does not support the modified rate type, the rate type is not changed; and if the peer MS supports the modified rate type, the rate type is changed.

The BSC modifies the AMR speech version and the rate set through a handover procedure or a mode modification procedure.

In this embodiment, functions of an AMR may be fully utilized while the MS performs the local switch by using the AMR speech version, so as to improve speech quality, reduce the number of modification operations, and implement the rate coordination between the BTSs.

The technical solutions of the embodiments of the present invention are described by taking a GSM system as an example, but the present invention may also be applied to other wireless access network system, for example, a Wideband Code Division Multiple Access (WCDMA) system performing a speech service and a Time Division Synchronous Code Division Multiple Access (TDS-CDMA) system.

The objectives, technical solutions, and beneficial effects of the present invention are further described in detail through the foregoing specific embodiments.

## Claims

1. A method for local switch, comprising:
detecting, by a Base Station Controller, BSC, whether adaptive multi-rate codec, AMR, speech versions used by two Mobile Stations, MSs, that need to perform local switch are the same and whether rate sets of the AMR speech versions of the two MSs that need to perform the local switch have an intersection;
when the AMR speech versions are different, modifying, by the BSC, the AMR speech versions through a handover procedure or a mode modification procedure so that the AMR speech versions are the same, and when the rate sets of the AMR speech versions do not have the intersection, modifying the rate sets of the AMR speech versions through the handover procedure or the mode modification procedure so that the rate sets of the AMR speech versions have the intersection; and
establishing, by the BSC, the local switch between the two MSs that have the same AMR speech version and the intersection of the rate sets.

2. The method according to claim 1, further comprising:
notifying Base Transceiver Stations, BTSs, that perform the local switch that rate negotiation should be performed.

3. The method according to claim 2, wherein the rate negotiation comprises: when one MS at one end of the two MSs that performs the local switch needs to change a rate, a BTS wherein the MS at the one end is located judges whether a peer MS of the two MSs and a BTS wherein the peer MS is located support a modified rate; if the peer MS and the BTS wherein the peer MS is located do not support the modified rate, the rate is not changed; and if the peer MS and the BTS wherein the peer MS is located support the modified rate type, the rate is changed.

4. A control apparatus for local switch, comprising:
a detection module (41), configured to detect whether adaptive multi-rate codec (AMR) speech versions of two Mobile Stations, MSs, that need to perform local switch are the same and whether rate sets of the AMR speech versions have an intersection;
a modification module (42), configured to: when the AMR speech versions are different, modify the AMR speech versions through a handover procedure or a mode modification procedure so that the AMR speech versions are the same, and when the rate sets of the AMR speech versions do not have the intersection, modify the rate sets of the AMR speech versions through the handover procedure or the mode modification procedure so that the rate sets of the AMR speech versions have the intersection; and
an establishment module (43), configured to establish the local switch between the two MSs that have the same AMR speech version and the intersection of the rate sets.

5. The apparatus according to claim 4, further comprising:
a notification module (44), configured to notify Base Transceiver Stations, BTSs, that performs the local switch that rate negotiation should be performed.

## Patentansprüche

1. Verfahren zum lokalen Vermitteln, das Folgendes umfasst:
Detektieren durch eine Basisstationssteuereinheit (Base Station Controller, BSC), ob adaptive Mehrfachratencodec-Sprachversionen (adaptive multi-rate codec speech versions, AMR-Sprachversionen), die von zwei Mobilstationen, MSs, die lokales Vermitteln ausführen müssen, verwendet werden, dieselben sind, und ob Ratengruppen der AMR-Sprachversionen der zwei MSs, die das lokale Vermitteln ausführen müssen, eine Überschneidung aufweisen;
wenn die AMR-Sprachversionen verschieden sind, Modifizieren durch die BSC der AMR-Sprachversionen durch eine Übergabeprozedur oder eine Betriebsartmodifikationsprozedur, so dass die AMR-Sprachversionen dieselben sind, und wenn die Ratengruppen der AMR-Sprachversionen keine Überschneidung aufweisen, Modifizieren der Ratengruppen der AMR-Sprachversionen durch die Übergabeprozedur oder die Betriebsartmodifikationsprozedur, so dass die Ratengruppen der AMR-Sprachversionen die Überschneidung aufweisen; und
Aufbauen der lokalen Vermittlung zwischen den zwei MSs, die dieselbe AMR-Sprachversion und die Überschneidung der Ratengruppen aufweisen, durch die BSC.

2. Verfahren nach Anspruch 1, das ferner Folgendes umfasst:
Melden an die Basissende-/Basisempfangsstationen (Base Transceiver Stations, BTSs), die das lokale Vermitteln ausführen, dass eine Ratenverhandlung ausgeführt werden sollte.

3. Verfahren nach Anspruch 2, wobei die Ratenverhandlung Folgendes umfasst: wenn eine MS an einem Ende der zwei MSs, die das lokale Vermitteln ausführt, eine Rate ändern muss, beurteilt eine BTS, in der sich die MS an dem einen Ende befindet, ob eine Partner-MS der zwei MSs und eine BTS, in der sich die Partner-MS befindet, eine modifizierte Rate unterstützen; falls die Partner-MS und die BTS, in der sich die Partner-MS befindet, die modifizierte Rate nicht unterstützen, wird die Rate nicht geändert; und falls die Partner-MS und die BTS, in der sich die Partner-MS befindet, den modifizierten Ratentyp unterstützen, wird die Rate geändert.

4. Steuervorrichtung zum lokalen Vermitteln, die Folgendes umfasst:
ein Detektionsmodul (41), das konfiguriert ist zu detektieren, ob adaptive Mehrfachratencodec-Sprachversionen (AMR-Sprachversionen) von zwei Mobilstationen, MSs, die lokales Vermitteln ausführen müssen, dieselben sind, und ob Ratengruppen der AMR-Sprachversionen eine Überschneidung aufweisen;
ein Modifikationsmodul (42), das konfiguriert ist: wenn die AMR-Sprachversionen verschieden sind, die AMR-Sprachversionen durch eine Übergabeprozedur oder eine Betriebsartmodifikationsprozedur zu modifizieren, so dass die AMR-Sprachversionen dieselben sind, und wenn die Ratengruppen der AMR-Sprachversionen keine Überschneidung aufweisen, die Ratengruppen der AMR-Sprachversionen durch die Übergabeprozedur oder die Betriebsartmodifikationsprozedur zu modifizieren, so dass die Ratengruppen der AMR-Sprachversionen die Überschneidung aufweisen; und
ein Aufbaumodul (43), das konfiguriert ist, die lokale Vermittlung zwischen den zwei MSs, die dieselbe AMR-Sprachversion und die Überschneidung der Ratengruppen aufweisen, aufzubauen.

5. Vorrichtung nach Anspruch 4, die ferner Folgendes umfasst:
ein Meldungsmodul (44), das konfiguriert ist, den Basissende-/Basisempfangsstationen, BTSs, die das lokale Vermitteln ausführen, zu melden, dass Ratenverhandlung ausgeführt werden sollte.

## Revendications

1. Procédé pour une commutation locale, comprenant les étapes suivantes :
détecter, par un contrôleur de station de base, BSC, si des versions vocales à codec adaptatif multi-débit, AMR, utilisées par deux stations mobiles, MS, qui ont besoin d'exécuter une commutation locale sont identiques et si des ensembles de débits des versions vocales AMR des deux MS qui ont besoin d'exécuter la commutation locale ont une intersection ;
lorsque les versions vocales AMR sont différentes, modifier, par le BSC, les versions vocales AMR par l'intermédiaire d'une procédure de transfert ou d'une procédure de modification de mode de manière à ce que les versions vocales AMR soient identiques, et lorsque les ensembles de débits des versions vocales AMR n'ont pas l'intersection, modifier les ensembles de débits des versions vocales AMR par l'intermédiaire de la procédure de transfert ou de la procédure de modification de mode de manière à ce que les ensembles de débits des versions vocales AMR aient l'intersection ; et
établir, par le BSC, la commutation locale entre les deux MS qui ont la même version vocale AMR et l'intersection des ensembles de débits.

2. Procédé selon la revendication 1, comprenant en outre l'étape suivante :
notifier à des stations d'émetteur-récepteur de base, BTS, qui exécutent la commutation locale que des négociations de débit devraient être effectuées.

3. Procédé selon la revendication 2, dans lequel la négociation de débit comprend les étapes suivantes : lorsqu'une MS à une extrémité des deux MS qui exécute la commutation locale a besoin de changer un débit, une BTS dans laquelle la MS à l'extrémité est située, juge si une MS pair des deux MS et une BTS dans laquelle la MS pair est située supportent un débit modifié ; si la MS pair et la BTS dans laquelle la MS pair est située ne supportent pas le débit modifié, le débit n'est pas changé ; et si la MS pair et la BTS dans laquelle la MS pair est située supportent le type de débit modifié, le débit est changé.

4. Appareil de commande pour une commutation locale, comprenant :
un module de détection (41), configuré pour détecter si des versions vocales à codec adaptatif multi-débit, AMR, de deux stations mobiles, MS, qui ont besoin d'exécuter une commutation locale sont identiques et si des ensembles de débits des versions vocales AMR ont une intersection ;
un module de modification (42), configuré pour : lorsque les versions vocales AMR sont différentes, modifier les versions vocales AMR par l'intermédiaire d'une procédure de transfert ou d'une procédure de modification de mode de manière à ce que les versions vocales AMR soient identiques, et lorsque les ensembles de débits des versions vocales AMR n'ont pas l'intersection, modifier les ensembles de débits des versions vocales AMR par l'intermédiaire de la procédure de transfert ou de la procédure de modification de mode de manière à ce que les ensembles de débits des versions vocales AMR aient l'intersection ; et
un module d'établissement (43), configuré pour établir la commutation locale entre les deux MS qui ont la même version vocale AMR et l'intersection des ensembles de débits.

5. Appareil selon la revendication 4, comprenant en outre :
un module de notification (44), configuré pour notifier à des stations d'émetteur-récepteur de base, BTS, qui exécutent la commutation locale, qu'une négociation de débit devrait être effectuée.
